# EUROPEAN PATENT SPECIFICATION

(11) **EP 3 558 155 B1**
(45) Date of publication and mention of the grant of the patent: **07.07.2021**
(21) Application number: 17830013.3
(22) Date of filing: 19.12.2017
(51) Int. Cl.: A61C 7/02, A61C 7/08, A61C 13/00, B23Q 7/04

(54) **EQUIPMENT FOR MANUFACTURING ORTHODONTIC AND/OR PROSTHETIC DENTAL DEVICES**
AUSRÜSTUNG ZUR HERSTELLUNG KIEFERORTHOPÄDISCHER UND/ODER PROTHETISCHER ZAHNÄRZTLICHER VORRICHTUNGEN
ÉQUIPEMENT DE FABRICATION DE DISPOSITIFS DENTAIRES ORTHODONTIQUES ET/OU PROTHÉTIQUES

(30) Priority: 20.12.2016 IT 201600128948
(43) Date of publication of application: 30.10.2019
(73) Proprietor: Airnivol S.r.l., 56023 Navacchio di Cascine (PI) (IT)
(72) Inventor: BARONE, Sandro, 56125 Pisa (IT); D'ANTÒ, Vincenzo, 80065 Sant'Agnello (NA) (IT); RAZIONALE, Armando Viviano, 56021 Cascina (PI) (IT)
(74) Representative: De Ros, Alberto
(86) International application number: PCT/IB2017/058098
(87) International publication number: WO 2018/116147

(56) References cited:
- DE-C1- 19 710 273
- JP-A- S61 265 248
- US-A1- 2008 141 534

## Description

The present invention relates to an equipment for manufacturing orthodontic and/or prosthetic dental devices, in particular orthodontic apparatuses for incremental dental repositioning, but also usable for manufacturing other dental devices such as bites, occlusal guides, prosthetic devices, surgical guides and so on. Specifically, the present invention relates to the realisation of completely automated equipment for manufacturing orthodontic or prosthetic dental devices.

The present invention is positioned among other things in the field of orthodontics and, more specifically, in the field of the design of orthodontic treatments using transparent or invisible orthodontic appliances.

In recent years, ever increasing use has been made of orthodontic appliances, also known simply as "dental appliances", of the transparent or invisible type, utilised in lieu of traditional fixed or mobile orthodontic appliances.

Compared to traditional orthodontic appliances, invisible appliances do not require positioning metal plates and/or braces, such as those typical of a fixed appliance, on teeth. In this way, in addition to making the application of the appliance easier, the aesthetic appearance of the patient during treatment remains unchanged. Moreover, compared to fixed appliances, it is easy to maintain a good level of dental hygiene, since it is possible to remove the appliances for more thorough cleaning of both the teeth and the appliances themselves.

In general, an orthodontic treatment employing invisible appliances entails designing a set of transparent, or clear, aligners that can be fitted on the dental arch to be treated, that start from a conformation complementary to a dental arch that is substantially similar to the initial one, until a conformation complementary to the desired arch is reached, passing through a plurality of intermediate conformations. Each aligner designed for the treatment plan serves the purpose of bringing the arch to the subsequent disposition and, in this way, to shift incrementally and thus gradually the individual teeth of the arch from an initial disposition to the final one.

For the design of the aligners belonging to a same set of aligners of a treatment plan, the prior art provides for starting from a digital model of the initial dental disposition to be treated, identifying a final dental disposition and defining a plurality of intermediate dispositions. Based on the identified set of dispositions, positive models corresponding to the individual intermediate and final dental dispositions. Such models are lastly employed for manufacturing the aligners as a negative mould of the models.

Alternatively, on the basis of digital models of the intermediate dispositions, it is possible to manufacture the related aligners directly by additive or subtractive prototyping.

Today, the manufacture of the set of aligners according to the orthodontic treatment plan entails sequential processing that, at each step, uses dedicated instrumentation between which the intermediate semi-finished products, which ultimately become the finished aligners, have to be transferred.

Similarly to what has been described for the orthodontic appliances for incremental dental positioning, also other dental devices such as bites, occlusal guides, prosthetic devices, surgical guides and so on, today are manufactured in a similar manner, needing to be subjected to sequential processing in dedicated working stations and thus to be transferred multiple times from one station to another.

The Applicant has observed that the constant transfer of the orthodontic and/or prosthetic semi-finished products between a working station and another leads to the need for appropriate position sensors, such as television cameras, which provide the position and the exact orientation of the semi-finished product to be subject to further processing. Indeed, one can correctly act with the subsequent processing step only if one knows the precise arrangement of the semi-finished product.

Moreover, the transfer of the semi-finished product from a working station to the next one requires in general the action of an operator, not allowing complete automation of the process.

From DE19710273 a dental manufacturing equipment is known wherein subtractive mechanical working operations are performed. The equipment comprises a plurality of working stations and a grasping device adapted to maintain the dental product grasped during the working operations and to move it between the plurality of working stations.

In light of the above, the problem at the basis of the present invention is to devise equipment for manufacturing orthodontic or prosthetic dental devices that is able to operate in a fully automatic manner without the need to continually receive references on the current position of the semi-finished product.

This problem is substantially solved by the equipment having the characteristics expressed in the accompanying independent claim.

The main advantageous aspects of the equipment are expressed in the accompanying dependent claims that are an integral part of the present description.

The Applicant has determined that, carrying out the prototyping directly in position in the grasping device, it is possible exactly to know the position and the orientation of the positive model or of the semi-finished product during the entire work cycle with no need for specific markings and for dedicated instrumentation to detect the disposition from time to time. It is thus particularly advantageous to pass from one working station to the other displacing the orthodontic and/or prosthetic semi-finished product or the positive model but keeping it grasped, possibly carrying out some operations several times.

Moreover, knowledge of the exact position of the semi-finished product or of the positive model enables advantageously to carry out an optimisation of the individual working steps, leading to savings in terms of processing times and material used.

The present invention can have at least one of the preferred characteristics that follow, the latter can in particular be combined at will to meet specific application requirements.

Preferably, the plurality of working stations further comprises an image acquisition station.

Preferably, the plurality of working stations further comprises a thermoforming station.

Preferably, the plurality of working stations further comprises a cutting station.

Preferably, the plurality of working stations further comprises a washing station and/or a hardening station and/or a surface finishing station.

Preferably, the equipment comprises a first prototyping station adapted to carry out a prototyping of the orthodontic or prosthetic semi-finished product and/or of the positive model by means of one or more subtractive mechanical working operations through one or more tools, and a second prototyping station adapted to carry out a prototyping of the orthodontic or prosthetic semi-finished product and/or of the positive model by means of one or more additive mechanical working operations.

Preferably, the grasping device is adapted to maintain permanently grasped the orthodontic or prosthetic semi-finished product and/or the positive model.

Preferably, the cutting station comprises at least one of a first cutting station of the laser type or a second cutting station of the milling type.

Preferably, the image acquisition station comprises an optical scanner.

Even more preferably, the optical scanner is of the mobile type.

Advantageously, the mobile optical scanner makes it possible to adapt to a plurality of different geometries increasing the versatility of the equipment.

Further features and advantages of the present invention will be more evident from the following description of some preferred embodiments thereof, made with reference to the accompanying drawings.

The different features in the individual configurations may be combined together at will according to the above description, if one were to benefit from the advantages resulting specifically from a particular combination.

In such drawings,
- figure 1 is a schematic plan view of a preferred embodiment of equipment for manufacturing orthodontic or prosthetic dental devices according to the present invention;
- figures 2a and 2b are schematic plan representations for the comparison between the thermoforming step according to the prior art and according to the present invention.

In the following description, for the illustration of the figures identical reference numerals or symbols are used to indicate constructive elements with the same function.

Moreover, for clarity of illustration, some references may not be repeated in all figures.

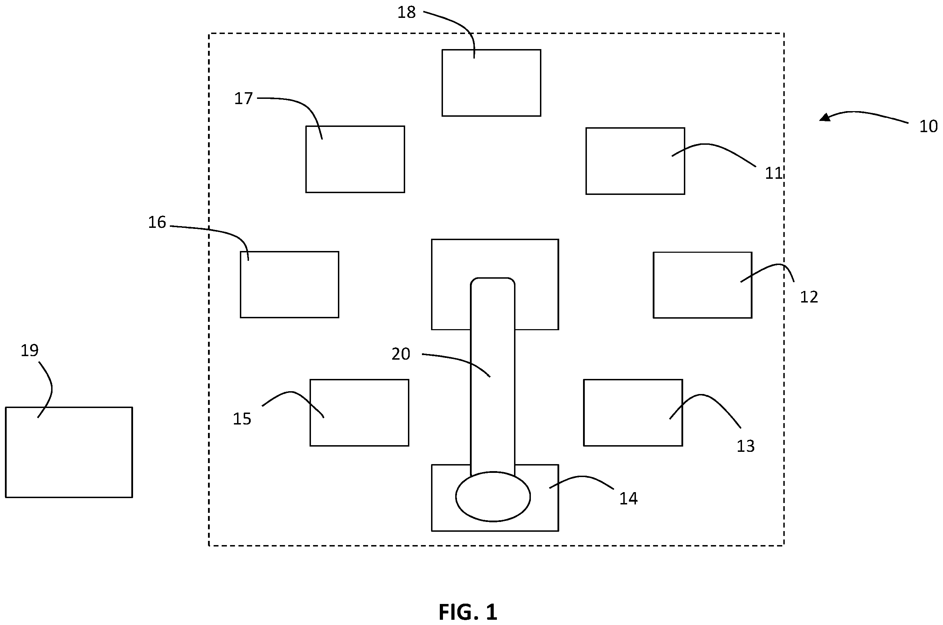

With reference to figure 1, equipment for manufacturing orthodontic or prosthetic dental devices according to the present invention is shown, indicated in its entirety with the numeral 10.

The manufacturing equipment 10 comprises a plurality of working stations 11-18 at which all the working operations necessary to obtain the final product are carried out.

A processing unit 19 is also provided, adapted to design the devices starting from a digital model of the dental arch, obtained for example through intraoral scanning, or of the print thereof. The central processing unit 19 also drive the operation of each working station 11-18 as well as a grasping device 20.

The grasping device 20 is adapted to maintain the orthodontic or prosthetic semi-finished product and/or the positive model grasped in particular during the working operations (not necessarily all of them), and to move it between the plurality of working stations (11-18). In Fig. 1, the grasping device 20 is represented as if it consisted of a base, an arm (for example rotating with respect to the base) and a head (for example articulated with respect to the arm); however, this is only one of many possibilities.

The central processing unit 19 is able to maintain updated information about position and orientation of the orthodontic or prosthetic semi-finished product and/or of the positive model. This is obtained thanks to the grasping device 20 which is in electric connection (not shown) with the central processing unit 19 and in mechanical connection (not shown) with the orthodontic or prosthetic semi-finished product and/or the positive model; naturally, other devices can contribute to maintain updated information about position and orientation.

The grasping device 20 can be adapted to maintain permanently grasped the orthodontic or prosthetic semi-finished product and/or the positive model, i.e. during the entire manufacturing process.

A first working station 11 is used for acquiring images and preferably comprises an optical scanner (not shown). According to a preferred embodiment of the manufacturing equipment 10, the optical scanner is of the mobile type for a versatile use according to the geometries to be digitised.

Said first station 11 is used for scanning the plaster model of the dental prints (or of the impressions), if the digital model of the dental arch is not already available. Moreover, the optical scanner is used to check the quality of the semi-finished products and/or of the positive models produced in the intermediate processing steps and/or of the finished product.

A second working station 12, also called "prototyping station", is used for prototyping a semi-finished product or the positive model used for an indirect realisation of the final product. The second working station 12 is preferably equipped with a plurality of mechanical working heads, each relating to a specific rapid prototyping technology, for the realisation of the semi-finished product or of the model through additive or subtractive prototyping technologies.

According to some embodiments, the equipment according to the present invention comprises a first prototyping station adapted to carry out a prototyping of the orthodontic or prosthetic semi-finished product and/or of the positive model by means of one or more subtractive mechanical working operations through one or more tools, and a second prototyping station adapted to carry out a prototyping of the orthodontic or prosthetic semi-finished product and/or of the positive model by means of one or more additive mechanical working operations.

According to the present invention the second working station 12 is adapted to carry out prototyping directly in position, aboard the grasping device 20 (i.e. while the orthodontic or prosthetic semi-finished product and/or the positive model is grasped by the grasping device) for the realisation of an unambiguous reference, common to all working stations 11-18. In this way, the positive model or the semi-finished product are realised directly in a position and with a known orientation on the device that will move it between the working stations 11-18.

This makes it possible to know the position and the orientation of the positive model or of the semi-finished product with exactitude throughout the working cycle with no need for dedicated instrumentation that senses its disposition from time to time.

It is thus particularly easy to pass from one working station to the other, possibly carrying out some operations several times. For example, optical scanning can be repeated with reference only to any areas acquired improperly in the initial scan. The equipment according to the invention makes it possible exactly to know the areas acquired poorly and thus to concentrate the repetition of the scan in said area. In addition, prototyping can be corrected locally as a result of a check of the quality of the semi-finished product carried out by means of the optical scanner present in the first working station 11. For example, the presence of undercuts in the positive model can be checked, to eliminate them before proceeding with thermoforming the semi-finished product.

Successive working stations 13, 14 are also provided, comprising a working head adapted to carry out the finishing or the post-treatment of the positive model or of the semi-finished product according to the prototyping technology used in the second working station 12. Said post-treatment stations are, for example, a washing station and/or a hardening station; washing can be obtained, for example, by immersion and/or by spraying an appropriate liquid (in the simplest case, water); hardening can be obtained, for example, by heat treatment, chemical treatment, irradiation.

An additional working station 15 comprises a thermoforming machine for the indirect production of the semi-finished product by thermoforming on the positive model. This station is used in case of indirect production of the semi-finished product by thermoforming on the positive model obtained in the second station 12.

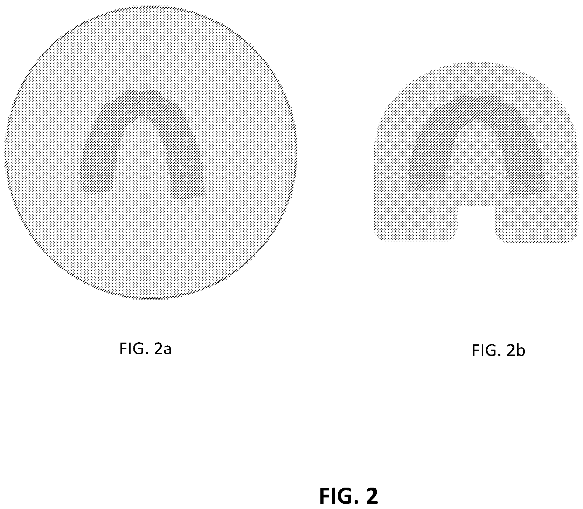

In particular, the fact that the disposition and the orientation of the positive model aboard the grasping device 20 are known makes it possible to carry out the thermoforming operation with considerable savings of material. The thermoforming machine can use a thermoplastic sheet of reduced size as shown in figure 2, versus the generic thermoplastic discs with a diameter of 125 mm that are usually employed.

One or more working stations 16, 17 are also provided to perform the cutting of the semi-finished product. By way of example, a first cutting station 16 can be of the laser type and a second cutting station 17 can be of the milling type.

The milling station 17 is for example used to cut the semi-finished product with reference to the gingival collars whose geometry is contained in the digital model of the dental arch, on the basis of which the positive model or the semi-finished product were created by prototyping. This operation can thus be carried out in the absence of specific position references, inasmuch as the semi-finished product itself or the positive model on which it was thermoformed are aboard the grasping device 20 in the same relative position and with the same relative orientation with which they were realised.

In addition, a working station is provided for surface finishing for example by means of pumice 18 from which the finished product is obtained in output.

In the laser cutting station 16 it is also possible to carry out the marking and/or the sterilisation of the finished product.

From the embodiments described above, additional variants are possible, without departing from the scope of the invention as defined in the apended claims.

## Claims

1. Equipment (10) for manufacturing orthodontic and/or prosthetic dental devices starting from an acquired and designed digital model thereof, comprising:
- a plurality of working stations (11-18) adapted to perform working operations on an orthodontic or prosthetic semi-finished product and/or on a positive model of a dental arch, at least one working station (12) of the plurality of working stations (11-18) being a prototyping station (12) and being adapted to carry out a prototyping of the orthodontic or prosthetic semi-finished product and/or of the positive model by means of one or more subtractive or additive mechanical working operations;
- a grasping device (20) adapted to maintain the orthodontic or prosthetic semi-finished product and/or the positive model grasped during the working operations, and to move it between the plurality of working stations (11-18); and
- a processing unit (19) adapted to drive the plurality of working stations (11-18) and the grasping device (20) maintaining updated information about position and orientation of the orthodontic or prosthetic semi-finished product and/or of the positive model thanks to the grasping device (20), wherein maintaining updated information is obtained thanks to the grasping device (20) which is in electric connection with the processing unit (19) and in mechanical connection with the orthodontic or prosthetic semi-finished product and/or of the positive model;
wherein the prototyping station (12) is adapted to carry out one or more subtractive or additive mechanical working operations while the orthodontic or prosthetic semi-finished product and/or the positive model is grasped by the grasping device (20);
the equipment (10) further comprising:
- a first prototyping station adapted to carry out a prototyping of the orthodontic or prosthetic semi-finished product and/or of the positive model by means of one or more subtractive mechanical working operations through one or more tools, and
- a second prototyping station adapted to carry out a prototyping of the orthodontic or prosthetic semi-finished product and/or of the positive model by means of one or more additive mechanical working operations.

2. Equipment (10) for manufacturing orthodontic and/or prosthetic dental devices according to claim 1, wherein the plurality of working stations further comprises
- an image acquisition station (11).

3. Equipment (10) for manufacturing orthodontic and/or prosthetic dental devices according to claim 2, wherein the plurality of working stations further comprises:
- a thermoforming station (15).

4. Equipment (10) for manufacturing orthodontic and/or prosthetic dental devices according to claim 3, wherein the plurality of working stations further comprises:
- a cutting station (16,17).

5. Equipment (10) for manufacturing orthodontic and/or prosthetic dental devices according to claim 1, wherein the plurality of working stations further comprises:
- a washing station (13);
and/or
- a hardening station (14);
and/or
- a surface finishing station (18).

6. Equipment (10) for manufacturing orthodontic and/or prosthetic dental devices according to any one of the preceding claims, wherein the grasping device (20) is adapted to maintain the orthodontic and/or prosthetic dental devices and/or the positive model permanently grasped.

7. Equipment (10) for manufacturing orthodontic and/or prosthetic dental devices according to any one of the preceding claims, wherein the cutting station (16,17) comprises at least one of a first cutting station of the laser type (16) or a second cutting station of the milling type (17).

8. Equipment (10) for manufacturing orthodontic and/or prosthetic dental devices according to any one of the preceding claims, wherein the image acquisition station (18) comprises an optical scanner, preferably of the mobile type.

## Patentansprüche

1. Ausrüstung (10) zur Herstellung kieferorthopädischer und/oder prothetischer zahnärztlicher Vorrichtungen ausgehend von einem erfassten und ausgelegten Digitalmodell davon, umfassend:
- eine Vielzahl von Arbeitsstationen (11-18), die zur Durchführung von Arbeitsvorgängen an einem kieferorthopädischen oder prothetischen Halbzeug und/oder an einem positiven Modell eines Zahnbogens geeignet sind, wobei mindestens eine Arbeitsstation (12) der Vielzahl von Arbeitsstationen (11-18) eine Prototyp-Fertigungsstation (12) ist und dazu geeignet ist, eine Prototypenfertigung des kieferorthopädischen oder prothetischen Halbzeugs und/oder des positiven Modells mittels eines oder mehrerer subtraktiver oder additiver mechanischer Arbeitsvorgänge durchzuführen;
- eine Greifvorrichtung (20), die dazu geeignet ist, das kieferorthopädische oder prothetische Halbzeug und/oder das positive Modell während der Arbeitsvorgänge gegriffen zu halten und es zwischen der Vielzahl von Arbeitsstationen (11-18) zu bewegen; und
- eine Verarbeitungseinheit (19), die dazu geeignet ist, die Vielzahl von Arbeitsstationen (11-18) und die Greifvorrichtung (20) anzutreiben, wobei die aktualisierte Information über Position und Ausrichtung des kieferorthopädischen oder prothetischen Halbzeugs und/oder des positiven Modells dank der Greifvorrichtung (20) aufrechterhalten wird, und die Aufrechterhaltung der aktualisierten Information dank der Greifvorrichtung (20) möglich ist, die mit der Verarbeitungseinheit (19) in elektrischer Verbindung und in mechanischer Verbindung mit dem kieferorthopädischen oder prothetischen Halbzeug und/oder dem positiven Modell steht;
wobei die Prototyp-Fertigungsstation (12) dazu geeignet ist, einen oder mehrere subtraktive oder additive mechanische Arbeitsvorgänge durchzuführen, während das kieferorthopädische oder prothetische Halbzeug und/oder das positive Modell von der Greifvorrichtung (20) gegriffen wird; wobei die Ausrüstung (10) ferner Folgendes umfasst:
- eine erste Prototyp-Fertigungsstation, die dazu geeignet ist eine Prototypenfertigung des kieferorthopädischen oder prothetischen Halbzeugs und/oder des positiven Modells mittels eines oder mehrerer subtraktiver mechanischer Arbeitsvorgänge durch ein oder mehrere Werkzeuge durchzuführen, und
- eine zweite Prototyp-Fertigungsstation, die dazu geeignet ist eine Prototypenfertigung des kieferorthopädischen oder prothetischen Halbzeugs und/oder des positiven Modells mittels eines oder mehrerer additiver mechanischer Arbeitsvorgänge durchzuführen.

2. Ausrüstung (10) zur Herstellung kieferorthopädischer und/oder prothetischer zahnärztlicher Vorrichtungen nach Anspruch 1, wobei die Vielzahl von Arbeitsstationen ferner
- eine Bildaufnahmestation (11) umfasst.

3. Ausrüstung (10) zur Herstellung kieferorthopädischer und/oder prothetischer zahnärztlicher Vorrichtungen nach Anspruch 2, wobei die Vielzahl von Arbeitsstationen ferner:
- eine Tiefziehstation (15) umfasst.

4. Ausrüstung (10) zur Herstellung kieferorthopädischer und/oder prothetischer zahnärztlicher Vorrichtungen nach Anspruch 3, wobei die Vielzahl von Arbeitsstationen ferner:
- eine Schneidstation (16,17) umfasst.

5. Ausrüstung (10) zur Herstellung kieferorthopädischer und/oder prothetischer zahnärztlicher Vorrichtungen nach Anspruch 1, wobei die Vielzahl von Arbeitsstationen ferner:
- eine Waschstation (13);
und/oder
- eine Härtungsstation (14);
und/oder
- eine Oberflächenveredelungsstation (18) umfasst.

6. Ausrüstung (10) zur Herstellung kieferorthopädischer und/oder prothetischer zahnärztlicher Vorrichtungen nach irgendeinem der vorgehenden Ansprüche, wobei die Greifvorrichtung (20) dazu geeignet ist, die kieferorthopädischen und/oder prothetischen zahnärztlichen Vorrichtungen und/oder das positive Modell ständig gegriffen zu halten.

7. Ausrüstung (10) zur Herstellung kieferorthopädischer und/oder prothetischer zahnärztlicher Vorrichtungen nach irgendeinem der vorgehenden Ansprüche, wobei die Schneidstation (16,17) mindestens eine erste Schneidstation vom Lasertyp (16) oder eine zweite Schneidstation vom Frästyp (17) umfasst.

8. Ausrüstung (10) zur Herstellung kieferorthopädischer und/oder prothetischer zahnärztlicher Vorrichtungen nach irgendeinem der vorgehenden Ansprüche, wobei die Bildaufnahmestation (18) einen optischen Abtaster, vorzugsweise des beweglichen Typs umfasst.

## Revendications

1. Équipement (10) pour fabriquer des dispositifs orthodontiques et/ou prothétiques dentaires à partir d'une modèle numérique acquis et conçu de ceux-ci, comprenant :
- une pluralité de stations de travail (11-18) aptes à réaliser des opérations de travail sur un produit orthodontique ou prothétique semi-fini et/ou sur un modèle positif d'une arcade dentaire, au moins une station de travail (12) de la pluralité de stations de travail (11-18) étant une station de prototypage (12) et étant apte à effectuer un prototypage du produit orthodontique ou prothétique semi-fini et/ou du modèle positif au moyen d'une ou de plusieurs opérations de travail mécaniques soustractives ou additives ;
- un dispositif de saisie (20) apte à maintenir le produit orthodontique ou prothétique semi-fini et/ou le modèle positif saisi pendant les opérations de travail, et à le déplacer entre la pluralité de stations de travail (11-18) ; et
- une unité de traitement (19) apte à entraîner la pluralité de stations de travail (11-18) et le dispositif de saisie (20) en maintenant à jour les informations concernant la position et l'orientation du produit orthodontique ou prothétique semi-fini et/ou du modèle positif grâce au dispositif de saisie (20), dans lequel maintenir à jours les informations est obtenu grâce au dispositif de saisie (20) qui est en liaison électrique avec l'unité de traitement (19) et en liaison mécanique avec le produit orthodontique ou prothétique semi-fini et/ou le modèle positif ;
dans lequel la station de prototypage (12) est apte à effecteur une ou plusieurs opérations de travail mécaniques soustractives ou additives pendant que le produit orthodontique ou prothétique semi-fini et/ou le modèle positif sont saisis par le dispositif de saisie (20) ;
l'équipement (10) comprenant en outre :
- une première station de prototypage apte à effectuer un prototypage du produit orthodontique ou prothétique semi-fini et/ou du modèle positif au moyen d'une ou de plusieurs opérations de travail mécaniques soustractives à travers un ou plusieurs outils, et
- une deuxième station de prototypage apte à effectuer un prototypage du produit orthodontique ou prothétique semi-fini et/ou du modèle positif au moyen d'une ou de plusieurs opérations de travail mécaniques additives.

2. Équipement (10) pour fabriquer des dispositifs orthodontiques et/ou prothétiques dentaires selon la revendication 1, dans lequel la pluralité de stations de travail comprend en outre
- une station d'acquisition d'images (11).

3. Équipement (10) pour fabriquer des dispositifs orthodontiques et/ou prothétiques dentaires selon la revendication 2, dans lequel la pluralité de stations de travail comprend en outre :
- une station de thermoformage (15).

4. Équipement (10) pour fabriquer des dispositifs orthodontiques et/ou prothétiques dentaires selon la revendication 3, dans lequel la pluralité de stations de travail comprend en outre :
- une station de découpe (16,17).

5. Équipement (10) pour fabriquer des dispositifs orthodontiques et/ou prothétiques dentaires selon la revendication 1, dans lequel la pluralité de stations de travail comprend en outre :
- une station de lavage (13) ;
et/ou
- une station de durcissement (14) ;
et/ou
- une station de finition de surface (18).

6. Équipement (10) pour fabriquer des dispositifs orthodontiques et/ou prothétiques dentaires selon l'une quelconque des revendications précédentes, dans lequel le dispositif de saisie (20) est apte à maintenir les dispositifs orthodontiques et/ou prothétiques dentaires et/ou le modèle positif saisis en permanence.

7. Équipement (10) pour fabriquer des dispositifs orthodontiques et/ou prothétiques dentaires selon l'une quelconque des revendications précédentes, dans lequel la station de découpe (16,17) comprend au moins une première station de découpe de type laser (16) et une deuxième station de découpe de type fraisage (17).

8. Équipement (10) pour fabriquer des dispositifs orthodontiques et/ou prothétiques dentaires selon l'une quelconque des revendications précédentes, dans lequel la station d'acquisition d'images (18) comprend un scanner optique, de préférence de type mobile.
